# EUROPÄISCHE PATENTSCHRIFT

(11) **EP 1 838 784 B1**
(45) Veröffentlichungstag und Bekanntmachung des Hinweises auf die Patenterteilung: **18.06.2008**
(21) Anmeldenummer: 05821799.3
(22) Anmeldetag: 31.12.2005
(51) Int. Cl.: C08L 67/00, C08G 63/00

(54) **BIOLOGISCH ABBAUBARE POLYESTERMISCHUNG**
BIOLOGICALLY-DEGRADABLE POLYESTER MIXTURE
MELANGES DE POLYESTERS BIODEGRADABLES

(30) Priorität: 12.01.2005 DE 102005001638; 04.11.2005 DE 102005053069
(43) Veröffentlichungstag der Anmeldung: 03.10.2007
(73) Patentinhaber: BASF SE, 67056 Ludwigshafen (DE)
(72) Erfinder: SEELIGER, Ursula, 68165 Mannheim (DE); SKUPIN, Gabriel, 67346 Speyer (DE); STÄRKE, Dirk, 67056 Ludwigshafen (DE)
(86) Internationale Anmeldenummer: PCT/EP2005/014162
(87) Internationale Veröffentlichungsnummer: WO 2006/074815

(56) Entgegenhaltungen:
- WO-A-20/05063886
- JP-A- 7 252 411
- JP-A- 2002 327 107
- US-A- 6 120 895
- US-A1- 2004 024 102
- US-A1- 2004 068 058
- PATENT ABSTRACTS OF JAPAN Bd. 2003, Nr. 03, 5. Mai 2003 (2003-05-05) & JP 2002 327107 A (UNITIKA LTD), 15. November 2002 (2002-11-15)
- PATENT ABSTRACTS OF JAPAN Bd. 1996, Nr. 02, 29. Februar 1996 (1996-02-29) & JP 07 252411 A (DAICEL CHEM IND LTD), 3. Oktober 1995 (1995-10-03)

## Beschreibung

Die vorliegende Erfindung betrifft biologisch abbaubare Polyestermischungen, umfassend
i) 5 bis 80 Gew.-%, bezogen auf das Gesamtgewicht der Komponenten i bis ii, mindestens eines Polyesters auf Basis von aliphatischen und aromatischen Dicarbonsäuren und aliphatischen Dihydroxyverbindung;
ii) 20 bis 95 Gew.-%, bezogen auf das Gesamtgewicht der Komponenten i bis ii, mindestens Homo- oder Copolyester ausgewählt aus der Gruppe bestehend aus Polylactid (PLA), Polyhydroxyalkanoate (z.B. PHB oder PHB/V) und Polyester aus aliphatischen Dicarbonsäuren und aliphatischen Diolen;
iii) 0,1 bis 15 Gew.-%, bezogen auf das Gesamtgewicht der Komponenten i bis ii, eines Copolymers aus Styrol und Glycidyl(meth)acrylaten, und
iv) 0 - 15 % Additive wie Stabilisatoren, Nukleierungsmittel, Gleit- und Antiblockmittel, Wachse, Weichmittel, Tenside, Antistatika, Antifog-Mittel oder Farbstoffe; und
v) 0 - 50 % anorganische oder organische Füllstoffe wie Kreide, Talkum, Silikate, Kaolin, Glimmer, Wollastonite, Montmorillonite oder cellulosehaltige Fasern wie z.B. Baumwolle, Flachs, Hanf, Brennnesselfasern o.ä.

Weiterhin betrifft die vorliegende Erfindung Verfahren zur Herstellung biologisch abbaubarer Polyestermischungen, Verzweigerbatches mit deren Hilfe sich die erfindungsgemäßen Polyestermischungen vorteilhaft herstellen lassen, die Verwendung von biologisch abbaubaren Polyestermischungen zur Herstellung von Formteilen, Folien oder Fasern sowie Formteile, Folien oder Fasern umfassend biologisch abbaubare Polyestermischungen.

Biologisch abbaubare Mischungen aus i) synthetisch hergestellten Polyestermaterialien und ii) Homo- oder Copolyestern - ausgewählt aus der Gruppe bestehend aus Polylactid, Polycaprolacton, Polyhydroxyalkanoate und Polyester aus aliphatischen Dicarbonsäuren und aliphatischen Diolen - sind bekannt (siehe EP-B 792 309). Solche Mischungen vereinigen idealerweise die wünschenswerten Eigenschaften der Einzelkomponenten, beispielsweise die in der Regel guten Verarbeitungs- und mechanischen Eigenschaften der synthetischen Polyester mit der üblicherweise kostengünstigeren Verfügbarkeit und ökologisch unbedenklichen Herstellung und Entsorgung der ii) oben aufgeführten Polymere wie Polylactid, Polycaprolacton, Polyhydroxyalkanoate und Polyester aus aliphatischen Dicarbonsäuren und aliphatischen Diolen.

In der Praxis ist es aber oftmals schwierig, die angestrebte Eigenschaftskombination zu erreichen. Polylactid und Polyhydroxyalkanoate müssen aufwendig vorgetrocknet werden, um einen Abbau der Polymere zu verhindern, Insbesondere für Folienanwendungen weisen die Mischungen eine zu geringe Blasenstabilität auf. Dies gilt insbesondere bei Mischungen mit mehr als 20 % Polylaktid oder Polyhydroxycarbonsäuren und < 80 % aromatisch-aliphatischem Copolyester. Weiterhin weisen insbesondere dicke Folien, die aus den Mischungen des Standes der Technik gefertigt werden, eine zu geringe Durchstoßfestigkeit auf. Dies tritt vor allem bei dicken Folien auf, die überwiegend Polylactid oder Polyhydroxycarbonsäure enthalten.

Der vorliegenden Erfindung liegt somit die Aufgabe zugrunde, biologisch abbaubare Mischungen aus i) synthetisch hergestellten Polyestermaterialien und ii) Homo- oder Copolyestern - ausgewählt aus der Gruppe bestehend aus Polylactid, Polycaprolacton, Polyhydroxyalkanoate und Polyester aus aliphatischen Dicarbonsäuren und aliphatischen Diolen - zur Verfügung zu stellen, die die obengenannten Nachteile nicht aufweisen.

Diese Aufgabe wird von den eingangs definierten biologisch abbaubaren Polyestermischungen, die im folgenden näher beschrieben sind, erfüllt. Die erfindungsgemäßen Polyestermischungen unterscheiden sich von denjenigen des Standes der Technik insbesondere durch den Verzweiger (Komponente iii).

Prinzipiell kommen für die Herstellung der erfindungsgemäßen biologisch abbaubaren Polyestermischungen als Komponente i alle Polyester auf Basis von aliphatischen und aromatischen Dicarbonsäuren und aliphatischen Dihydroxyverbindung, sogenannte teilaromatische Polyester, in Betracht. Selbstverständlich sind auch Mischungen mehrerer solcher Polyester als Komponente i geeignet.

Unter teilaromatischen Polyestern sollen erfindungsgemäß auch Polyesterderivate verstanden werden wie Polyetherester, Polyesteramide oder Polyetheresteramide. Zu den geeigneten teilaromatischen Polyestern gehören lineare nicht kettenverlängerte Polyester (WO 92/09654). Bevorzugt werden kettenverlängerte und/oder verzweigte teilaromatische Polyester. Letztere sind aus den eingangs genannten Schriften, WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht. Insbesondere sind unter teilaromatischen Polyestern Produkte wie Ecoflex^{®} (BASF Aktiengesellschaft) und Eastar^{®} Bio (Novamont) zu verstehen.

Zu den besonders bevorzugten teilaromatischen Polyestern zählen Polyester, die als wesentliche Komponenten
A) eine Säurekomponente aus
   a1) 30 bis 99 mol-% mindestens einer aliphatischen oder mindestens einer cycloaliphatischen Dicarbonsäure oder deren esterbildende Derivate oder Mischungen davon
   a2) 1 bis 70 mol-% mindestens einer aromatischen Dicarbonsäure oder deren esterbildendem Derivat oder Mischungen davon und
   a3) 0 bis 5 mol-% einer sulfonatgruppenhaltigen Verbindung,
B) eine Diolkomponente ausgewählt aus mindestens einem C₂-bis C₁₂-Alkandiol und mindestens einem C₅- bis C₁₀-Cycloalkandiol oder Mischungen davon
und gewünschtenfalls darüber hinaus eine oder mehrere Komponenten ausgewählt aus
C) einer Komponente ausgewählt aus
   c1) mindestens einer Etherfunktionen enthaltenden Dihydroxyverbindung der Formel I

      HO-[(CH₂)ₙ-O]ₘ-H (I)

      in der n für 2, 3 oder 4 und m für eine ganze Zahl von 2 bis 250 stehen
   c2) mindestens einer Hydroxycarbonsäure oder Formel IIa oder IIb 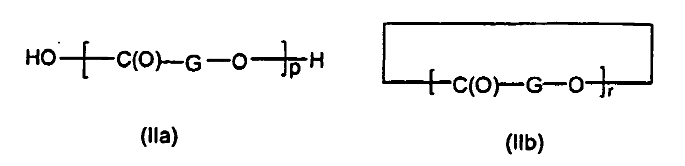 in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
   c3) mindestens einem Amino-C₂- bis C₁₂-alkanol oder mindestens einem Amino-C₅-bis C₁₀-cycloalkanol oder Mischungen davon
   c4) mindestens einem Diamino-C₁-bis C₈-Alkan
   c5) mindestens einem 2,2'-Bisoxazolins der allgemeinen Formel III 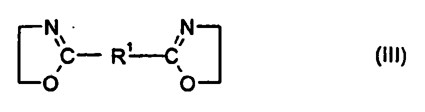 wobei R¹ eine Einfachbindung, eine (CH₂)_{z}-Alkylengruppe, mit z = 2,3 oder 4, oder eine Phenylengruppe bedeutet
   c6) mindestens einer Aminocarbonsäure ausgewählt aus der Gruppe, bestehend aus den natürlichen Aminosäuren, Polyamiden, erhältlich durch Polykondensation einer Dicarbonsäure mit 4 bis 6 C-Atomen und einem Diamin mit 4 bis 10 C-Atomen, Verbindungen der Formeln IV a und IVb 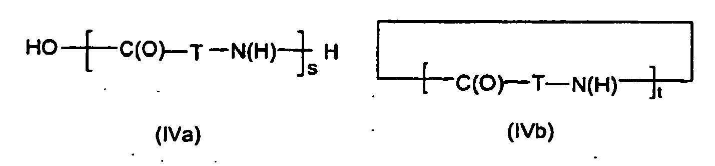 in der s eine ganze Zahl von 1 bis 1500 und t eine ganze Zahl von 1 bis 4 bedeuten, und T für einen Rest steht, der ausgewählt ist aus der Gruppe bestehend aus Phenylen, -(CH₂)ᵤ-, wobei u eine ganze Zahl von 1 bis 12 bedeutet, -C(R²)H- und -C(R²)HCH₂, wobei R² für Methyl oder Ethyl steht,
      und Polyoxazolinen mit der wiederkehrenden Einheit V 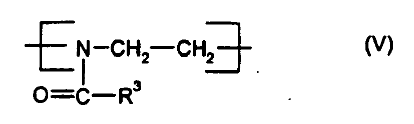 in der R³ für Wasserstoff, C₁-C₆-Alkyl, C₅-C₈-Cycloalkyl, unsubstituierten oder mit C₁-C₄-Alkylgruppen bis zu dreifach substituiertes Phenyl oder für Tetrahydrofuryl steht,
      oder Mischungen aus c1 bis c6
      und
D) einer Komponente ausgewählt aus
   d1) mindestens einer Verbindung mit mindestens drei zur Esterbildung befähigten Gruppen,
   d2) mindestens eines Isocyanates
   d3) mindestens eines Divinylethers
   oder Mischungen aus d1) bis d3) enthalten.

Die Säurekomponente A der teilaromatischen Polyester enthält in einer bevorzugten Ausführungsform von 30 bis 70, insbesondere von 40 bis 60 mol-% a1 und von 30 bis 70, insbesondere von 40 bis 60 mol-% a2.

Als aliphatische Säuren und die entsprechenden Derivate a1 kommen im allgemeinen solche mit 2 bis 10 Kohlenstoffatomen, vorzugsweise 4 bis 6 Kohlenstoffatomen, in Betracht. Sie können sowohl linear als auch verzweigt sein. Die im Rahmen der vorliegenden Erfindung verwendbaren cycloaliphatischen Dicarbonsäuren sind in der Regel solche mit 7 bis 10 Kohlenstoffatomen und insbesondere solche mit 8 Kohlenstoffatomen. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Malonsäure, Bernsteinsäure, Glutarsäure, 2-Methylglutarsäure, 3-Methylglutarsäure, Adipinsäure, Pimelinsäure, Acelainsäure, Sebacinsäure, Fumarsäure, 2,2-Dimethylglutarsäure, Suberinsäure, 1,3-Cyclopentandicarbonsäure, 1,4-Cyclohexandicarbonsäure, 1,3-Cyclohexandicarbonsäure, Diglykolsäure, Itaconsäure, Maleinsäure und 2,5-Norbomandicarbonsäure.

Als esterbildende Derivate der oben genannten aliphatischen oder cycloaliphatischen Dicarbonsäuren, die ebenso verwendbar sind, sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch aus zwei oder mehr davon eingesetzt werden.

Bevorzugt werden Bernsteinsäure, Adipinsäure, Azelainsäure, Sebacinsaüre, Brassylsäure oder deren jeweilige esterbildenden Derivate oder Mischungen davon eingesetzt. Besonders bevorzugt wird Bernsteinsäure, Adipinsäure oder Sebacinsäure oder deren jeweilige esterbildenden Derivate oder Mischungen davon eingesetzt. Besonders bevorzugt wird Adipinsäure oder deren esterbildende Derivate, wie deren Alkylester oder deren Mischungen eingesetzt. Als aliphatische Dicarbonsäure werden Sebacinsäure oder Mischungen von Sebacinsäure mit Adipinsäure bevorzugt eingesetzt, wenn Polymermischungen mit "harten" bzw. "spröden" Komponenten ii) wie beispielsweise Polyhydroxybutyrat oder insbesondere Polylactid hergestellt werden. Als aliphatische Dicarbonsäure werden Bernsteinsäure oder Mischungen von Bernsteinsäure mit Adipinsäure bevorzugt eingesetzt, wenn Polymermischungen mit "weichen" bzw. "zähen" Komponenten ii) wie beispielsweise Polyhydroxybuyratcovaleriat hergestellt werden.

Bernsteinsäure, Azelainsäure, Sebacinsäure und Brassylsäure haben zudem den Vorteil dass sie als nachwachsende Rohstoffe zugänglich sind.

Als aromatische Dicarbonsäure a2 sind im allgemeinen solche mit 8 bis 12 Kohlenstoffatomen und vorzugsweise solche mit 8 Kohlenstoffatomen zu nennen. Beispielhaft erwähnt seien Terephthalsäure, Isophthalsäure, 2,6-Naphthoesäure und 1,5-Naphthoesäure sowie esterbildende Derivate davon. Dabei sind insbesondere die Di-C₁-C₈-Alkylester, z.B. Dimethyl-, Diethyl-, Di-n-propyl-, Di-iso-propyl, Di-n-butyl-, Di-iso-butyl, Di-t-butyl, Di-n-pentyl-, Di-iso-pentyl oder Di-n-hexylester zu nennen. Die Anhydride der Dicarbonsäuren a2 sind ebenso geeignete esterbildende Derivate.

Prinzipiell können jedoch auch aromatische Dicarbonsäuren a2 mit einer größeren Anzahl an Kohlenstoffatomen, beispielsweise bis zu 20 Kohlenstoffatomen, eingesetzt werden.

Die aromatischen Dicarbonsäuren oder deren esterbildende Derivate a2 können einzeln oder als Gemisch aus zwei oder mehr davon eingesetzt werden. Besonders bevorzugt wird Terephthalsäure oder deren esterbildende Derivate wie Dimethylterephthalat, verwendet.

Als sulfonatgruppenhaltige Verbindung setzt man üblicherweise ein Alkali- oder Erdalkalimetallsalz einer sulfonatgruppenhaltigen Dicarbonsäure oder deren esterbildende Derivate ein, bevorzugt Alkalimetallsalze der 5-Sulphoisophthalsäure oder deren Mischungen, besonders bevorzugt das Natriumsalz.

Nach einer der bevorzugten Ausführungsformen enthält die Säurekomponente A von 40 bis 60 mol-% a1, von 40 bis 60 mol-% a2 und von 0 bis 2 mol-% a3. Nach einer weiteren bevorzugten Ausführungsform enthält die Säurekomponente A von 40 bis 59,9 mol-% a1, von 40 bis 59,9 mol-% a2 und von 0,1 bis 1 mol-% a3, insbesondere von 40 bis 59,8 mol-% a1, von 40 bis 59,8 mol-% a2 und von 0,2 bis 0,5 mol-% a3.

Im allgemeinen werden die Diole B unter verzweigten oder linearen Alkandiolen mit 2 bis 12 Kohlenstoffatomen, bevorzugt 4 bis 6 Kohlenstoffatomen, oder Cycloalkandiolen mit 5 bis 10 Kohlenstoffatomen ausgewählt.

Beispiele geeigneter Alkandiole sind Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl-1,3-propandiol, 2-Ethyl-2-butyl-1,3-propandiol, 2-Ethyl-2-isobutyl- 1,3-propandiol, 2,2,4-Trimethyl-1,6-hexandiol, insbesondere Ethylenglykol, 1,3-Propandiol, 1,4-Butandiol und 2,2-Dimethyl- 1,3-propandiol (Neopentylglykol); Cyclopentandiol, 1,4-Cyclohexandiol, 1,2-Cyclohexandimethanol, 1,3-Cyclohexandimethanol, 1,4-Cyclohexandimethanol oder 2,2,4,4-Tetramethyl-1,3-cyclobutandiol. Besonders bevorzugt sind 1,4-Butandiol, insbesondere in Kombination mit Adipinsäure als Komponente a1) und 1,3- Propandiol, insbesondere in Kombination mit Sebacinsäure als Komponente a1). 1,3- Propandiol und 1,4-Butondrol haben zudem den Vorteil, dass sie als nachwachsende Rohstoffe zugänglich sind. Es können auch Mischungen unterschiedlicher Alkandiole verwendet werden.

Abhängig davon ob ein Überschuss an Säure- oder OH-Endgruppen gewünscht wird, kann entweder die Komponente A oder die Komponente B im Überschuss eingesetzt werden. Nach einer bevorzugten Ausführungsform kann das Molverhältnis der eingesetzten Komponenten A zu B im Bereich von 0,4:1 bis 1,5:1, bevorzugt im Bereich von 0,6:1 bis 1,1:1 liegen.

Neben den Komponenten A und B können die Polyester, auf denen die erfindungsgemäßen Polyestermischungen basieren, weitere Komponenten enthalten.

Als Dihydroxyverbindungen c1 setzt man bevorzugt Diethylenglykol, Triethylenglykol, Polyethylenglykol, Polypropylenglykol und Polytetrahydrofuran (Poly-THF), besonders bevorzugt Diethylenglykol, Triethylenglykol und Polyethylenglykol, ein, wobei man auch Mischungen davon oder Verbindungen, die unterschiedliche Variablen n aufweisen (siehe Formel I), beispielsweise Polyethylenglykol, das Propyleneinheiten (n = 3) enthält, beispielsweise erhältlich durch Polymerisation nach an sich bekannten Methoden von zuerst Ethylenoxid und anschließend mit Propylenoxid, besonders bevorzugt ein Polymer auf Basis von Polyethylenglykol, mit unterschiedlichen Variablen n, wobei Einheiten gebildet aus Ethylenoxid überwiegen. Das Molekulargewicht (Mₙ) des Polyethylenglykols wählt man in der Regel im Bereich von 250 bis 8000, bevorzugt von 600 bis 3000 g/mol.

Nach einer der bevorzugten Ausführungsformen können beispielsweise von 15 bis 98, bevorzugt 60 bis 99,5 mol-% der Diole B und 0,2 bis 85, bevorzugt 0,5 bis 30 mol% der Dihydroxyverbindungen c1, bezogen auf die molare Menge von B und c1, für die Herstellung der teilaromatischen Polyester verwendet werden.

In einer bevorzugten Ausführungsform setzt man als Hydroxycarbonsäure c2) ein: Glykolsäure, D-, L-, D,L-Milchsäure, 6-Hydroxyhexansäure, deren cyclische Derivate wie Glycolid (1,4-Dioxan-2,5-dion), D-, L-Dilactid (3,6-dimethyl-1,4- dioxan-2,5-dion), p-Hydroxybenzoesäure sowie deren Oligomere und Polymere wie 3-Polyhydroxybuttersäure, Polyhydroxyvaleriansäure, Polylactid (beispielsweise als NatureWorks® (Fa. Cargill) erhältlich) sowie eine Mischung aus 3-Polyhydroxybuttersäure und Polyhydroxy-valeriansäure (letzteres ist unter dem Namen Biopol® von Zeneca erhältlich), besonders bevorzugt für die Herstellung von teilaromatischen Polyestern sind die niedermolekularen und cyclischen Derivate davon.

Die Hydroxycarbonsäuren können beispielsweise in Mengen von 0,01 bis 50, bevorzugt von 0,1 bis 40 Gew.-% bezogen auf die Menge an A und B verwendet werden.

Als Amino-C₂-C₁₂-alkanol oder Amino-C₅-C₁₀-cyloalkanol (Komponente c3), wobei hier unter auch 4-Aminomethylcyclohexanmethanol fallen soll, setzt man bevorzugt Amino-C₂-C₆-alkanole wie 2-Aminoethanol, 3-Aminopropanol, 4-Aminobutanol, 5-Aminopentanol, 6-Aminohexanol sowie Amino-C₅-C₈-cyloalkanole wie Aminocyclopentanol und Aminocyclohexanol oder Mischungen davon ein.

Als Diamino-C₁-C₈-alkan (Komponente c4) setzt man bevorzugt Diamino-C₄-C₆-alkane ein wie 1,4-Diminobutan, 1,5-Diaminopentan und 1,6-Diaminohexan (Hexamethylendiamin, "HMD").

Nach einer bevorzugten Ausführungsform kann von 0,5 bis 99,5 mol-%, bevorzugt 0,5 bis 50 mol-%, c3, bezogen auf die Molmenge von B, und von 0 bis 50, bevorzugt von 0 bis 35 mol-%, c4, bezogen auf die Molmenge von B, für die Herstellung der teilaromatischen Polyester eingesetzt werden.

Die 2,2'-Bisoxazoline c5 der allgemeinen Formel III sind im allgemeinen erhältlich durch das Verfahren aus Angew. Chem. Int. Edit., Vol. 11 (1972), S. 287-288. Besonders bevorzugte Bisoxazoline sind solche, in denen R¹ eine Einfachbindung, eine (CH₂)_{z}-Alkylengruppe, mit z = 2,3 oder 4 wie Methylen, Ethan-1,2-diyl, Propan-1,3-diyl, Propan-1,2-diyl, oder eine Phenylengruppe bedeutet. Als besonders bevorzugte

Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt.

Zur Herstellung der teilaromatischen Polyester können beispielsweise von 70 bis 98 mol-% B, bis 30 mol-% c3 und 0,5 bis 30 mol-% c4 und 0,5 bis 30 mol-% c5, jeweils bezogen auf die Summe der Molmengen der Komponenten B, c3, c4 und c5, verwendet werden. Nach einer anderen bevorzugten Ausführungsform ist es möglich von 0,1 bis 5, bevorzugt 0,2 bis 4 Gew.-% c5, bezogen auf das Gesamtgewicht von A und B, einzusetzen.
Als Komponente c6 können natürliche Aminocarbonsäuren verwendet werden. Zu diesen zählen Valin, Leucin, Isoleucin, Threonin, Methionin, Phenylalanin, Tryptophan, Lysin, Alanin, Arginin, Aspartamsäure, Cystein, Glutaminsäure, Glycin, Histidin, Prolin, Serin, Tryosin, Asparagin oder Glutamin.

Bevorzugte Aminocarbonsäuren der allgemeinen Formeln IVa und IVb sind die, worin s eine ganze Zahl von 1 bis 1000 und t eine ganze Zahl von 1 bis 4, bevorzugt 1 oder 2 bedeuten und T ausgewählt ist aus der Gruppe Phenylen und -(CH₂)ᵤ-, wobei u 1, 5 oder 12 bedeutet.

Ferner kann c6 auch ein Polyoxazolin der allgemeinen Formel V sein. C6 kann aber auch eine Mischung unterschiedlicher Aminocarbonsäuren und/oder Polyoxazoline sein.

Nach einer bevorzugten Ausführungsform kann c6 in Mengen von 0,01 bis 50, bevorzugt von 0,1 bis 40 Gew.-%, bezogen auf die Gesamtmenge der Komponenten A und B, eingesetzt werden.

Als weitere Komponenten, die optional zur Herstellung der teilaromatischen Polyester eingesetzt werden können, zählen Verbindungen d1, die mindestens drei zur Esterbildung befähigte Gruppen enthalten.

Die Verbindungen d1 enthalten bevorzugt drei bis zehn funktionelle Gruppen, welche zur Ausbildung von Esterbindungen fähig sind. Besonders bevorzugte Verbindungen d1 haben drei bis sechs funktionelle Gruppen dieser Art im Molekül, insbesondere drei bis sechs Hydroxylgruppen und/oder Carboxylgruppen. Beispielhaft seien genannt:
Weinsäure, Zitronensäure, Äpfelsäure;
Trimethylolpropan, Trimethylolethan;
Pentaerythrit;
Polyethertriole;
Glycerin;
Trimesinsäure;
Trimellitsäure, -anhydrid;
Pyromellitsäure, -dianhydrid und
Hydroxyisophthalsäure.

Die Verbindungen d1 werden in der Regel in Mengen von 0,01 bis 15, bevorzugt 0,05 bis 10, besonders bevorzugt 0,1 bis 4 mol-%, bezogen auf die Komponente A eingesetzt.

Als Komponente d2 werden ein oder eine Mischung unterschiedlicher Isocyanate eingesetzt Es können aromatische oder aliphatische Diisocyanate eingesetzt werden. Es können aber auch höher funktionelle Isocyanate verwendet werden.

Unter einem aromatischen Diisocyanat d2 werden im Rahmen der vorliegenden Erfindung vor allem

Toluylen-2,4-diisocyanat, Toluylen-2,6-diisocyanat, 2,2'-Diphenylmethandiisocyanat, 2,4'-Diphenylmethandiisocyanat, 4,4'-Diphenylmethandiisocyanat, Naphthylen-1,5-diisocyanat oder Xylylen-diisocyanat verstanden.

Darunter werden 2,2'-, 2,4'- sowie 4,4'-Diphenylmethandiisocyanat als Komponente d2 besonders bevorzugt. Im Allgemeinen werden letztere Diisocyanate als Mischung eingesetzt.

Als dreikemiges Isocyanat d2 kommt auch Tri(4-isocyanophenyl)methan in Betracht. Die mehrkernigen aromatischen Diisocyanate fallen beispielsweise bei der Herstellung von ein- oder zweikernigen Diisocyanaten an.

In untergeordneten Mengen, z.B. bis zu 5 Gew.-%, bezogen auf das Gesamtgewicht der Komponente d2, kann die Komponente d2 auch Urethiongruppen, beispielsweise zum Verkappen der Isocyanatgruppen, enthalten.

Unter einem aliphatischen Diisocyanat d2 werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclohexan), verstanden. Besonders bevorzugte aliphatische Diisocyanate d2 sind 1,6-Hexamethylendiisocyanat und Isophorondiisocyanat.

Zu den bevorzugten Isocyanuraten zählen die aliphatischen Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat oder Methylen-bis(4-isocyanatocyclohexan), ableiten. Dabei können die Alkylendiisocyanate sowohl linear als auch verzweigt sein. Besonders bevorzugt werden Isocyanurate, die auf n-Hexamethylendiisocyanat basieren, beispielsweise cyclische Trimere, Pentamere oder höhere Oligomere des n-Hexamethytendiisocyanats.

Im allgemeinen wird die Komponente d2 in Mengen von 0,01 bis 5, bevorzugt 0,05 bis 4 mol-%, besonders bevorzugt 0,1 bis 4 mol-% bezogen auf die Summe der Molmengen von A und B verwendet.

Als Divinylether d3 kann man im allgemeinen alle üblichen und kommerziell erhältlichen Divinylether einsetzen. Bevorzugt verwendet werden 1,4-Butandiol-divinylether, 1,6-Hexandiol-divinylether oder 1,4-Cyclohexandimethanol-divinylether oder Mischungen davon.

Bevorzugt werden die Divinylether in Mengen von 0,01 bis 5, insbesondere von 0,2 bis 4 Gew.-%, bezogen auf das Gesamtgewicht von A und B, eingesetzt.

Beispiele bevorzugter teilaromatischer Polyester basieren auf den folgenden Komponenten
A, B, d1
A, B, d2
A, B, d1, d2
A, B, d3
A, B, c1
A, B, c1, d3
A, B, c3, c4
A, B, c3, c4, c5
A, B, d1, c3, c5
A, B, c3, d3
A, B, c3, d1
A, B, c1, c3, d3
A, B, c2

Darunter sind teilaromatische Polyester, die auf A, B, d1 oder A, B, d2 oder auf A, B, d1, d2 basieren besonders bevorzugt. Nach einer anderen bevorzugten Ausführungsform basieren die teilaromatischen Polyester auf A, B, c3, c4, c5 oder A, B, d1, c3, c5.

Die genannten teilaromatischen Polyester und die erfindungsgemäßen Polyestermischungen sind in der Regel biologisch abbaubar.

Im Sinne der vorliegenden Erfindung ist das Merkmal "biologisch abbaubar" für einen Stoff oder ein Stoffgemisch dann erfüllt, wenn dieser Stoff oder das Stoffgemisch in mindestens einem der drei in DIN V 54900-2 (Vomorm, Stand September 1998) definierten Verfahren einen prozentualen Grad des biologischen Abbaus von mindestens 60% aufweist.

Im Allgemeinen führt die biologische Abbaubarkeit dazu, dass die Polyester-(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 oder DIN V 54900-2, Verfahren 3, CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400 beschrieben.

Die Herstellung der teilaromatischen Polyester ist an sich bekannt oder kann nach an sich bekannten Methoden erfolgen.

Die bevorzugten teilaromatischen Polyester sind charakterisiert durch ein Molekulargewicht (Mₙ) im Bereich von 1000 bis 100000, insbesondere im Bereich von 9000 bis 75000 g/mol, bevorzugt im Bereich von 10000 bis 50000 g/mol und einem Schmelzpunkt im Bereich von 60 bis 170, bevorzugt im Bereich von 80 bis 150°C.

Die genannten teilaromatischen Polyester können Hydroxy- und/oder Carboxylendgruppen in jedem beliebigen Verhältnis aufweisen. Die genannten teilaromatischen Polyester können auch endgruppenmodifiziert werden. So können beispielsweise OH-Endgruppen durch Umsetzung mit Phthalsäure, Phthalsäureanhydrid, Trimellithsäure, Trimellithsäureanhydrid, Pyromellithsäure oder Pyromellithsäureanhydrid säuremodifiziert werden.

Grundsätzlich sind als Komponenten ii der biologisch abbaubaren Polyestermischungen Homo- oder Copolyester ausgewählt aus der Gruppe bestehend aus Polylactid, Polyhydroxyalkanoate und Polyester aus aliphatischen Dicarbonsäuren und aliphatischen Diolen, geeignet. Bevorzugte Komponeneten ii sind Polylactid (PLA) und Polyhydroxyalkanoate, und hier insbesondere Polyhydroxybutyrat (PHB) Polyhydroxybutyrate covaleriat (PHBV). Insbesondere sind Produkte wie NatureWorks® (Polylaktid der Fa. Cargill Dow), Biocycle® (Polyhydroxybutyrat der Fa. PHB Ind.); Enmat® (Polyhydroxybutyrat-covaleriat der Fa. Tianan) umfasst.

Als erfindungsgemäße Komponente iii werden Copolymere aus Styrol und Glycidyl(meth)acrylaten, wie sie beispielsweise von Fa. Johnson Polymer unter der Marke Joncryl® ADR 4368 vertrieben werden, eingesetzt.

Weiterhin werden vorzugsweise Epoxidgruppen-haltige (epoxidierte) natürliche Öle oder Fettsäureester eingesetzt. Unter natürlichen Ölen werden beispielsweise Olivenöl, Leinöl, Sojabohnenöl, Palmöl, Erdnussöl, Kokusnussöl,Tangöl, Lebertran oder eine Mischung von diesen Verbindungen verstanden. Insbesondere bevorzugt sind epoxidiertes Sojabohnenöl (z.B. Merginat® ESBO von Hobum, Hamburg, oder Edenol® B 316 von Cognis, Düsseldorf). Wie in den Beispielen näher ausgeführt ist insbesondere die Kombination von Joncryl® ADR 4368 und Merginat® ESBO bevorzugt.

Komponente iii) wird in 0,1 bis 15 Gew.-%, bevorzugt in 0,1 bis 10 Gew.-%, und besonders bevorzugt in 0,5 bis 2 Gew.-%, bezogen auf das Gesamtgewicht der Komponenten i) bis ii), eingesetzt.

Die erfindungsgemäßen biologisch abbaubaren Polyestermischungen enthalten üblicherweise von 5, bevorzugt 10 Gew.-%, besonders bevorzugt von 15 bis 80 Gew.-%, insbesondere von 40 bis 60 Gew.-% Komponente i und von 20 bis 95 Gew.-%, bevorzugt von 20 bis 80 Gew.-%, besonders bevorzugt von 40 bis 80 Gew.-%, ganz besonders bevorzugt von 40 bis 60 Gew.-% Komponente ii, wobei sich die Gewichtsprozente jeweils auf das Gesamtgewicht der Komponenten i bis ii beziehen und zusammen 100 Gew.-% ergeben.

Für die Herstellung von extrudierten Thermoplasten wie beispielsweise Folien ist die Blasenstabilität von großer Bedeutung. Es wurde nun gefunden, dass Mischungen, in denen Komponente i eine vorzugsweise kontinuierliche Phase oder zumindest kokontinuierliche Phase ausbildet und Komponente ii in separaten Bereichen in diese Phase eingebettet ist, gute Blasenstabilität aufweisen. Damit Komponente i eine kontinuierliche Phase ausbildet, weisen die Mischungen in der Regel mehr als 40 Gew.-%, vorzugsweise mehr als 50 Gew.-% an Komponente i bezogen jeweils auf das Gesamtgewicht der Komponenten i und ii, auf.

Für die Herstellung von Formteilen für beispielsweise den Spritzguss können Polyestermischungen mit hohem Polyhydroxybutyrat (PHB)- oder insbesondere Polylactid (PLA)-Anteil (Komponente ii) eingesetzt werden. Üblicherweise sind hier Mischungen von 60 bis 95 Gew.-% Komponente realisierbar. Ein verbessertes Verfahren zur Herstellung von schlagzähen Formmassen wird bei den Herstellverfahren beschrieben.

Setzt man als Komponente i) Polyester ein, die als Dicarbonsäure (Komponente a1)) Sebacinsäure oder Mischungen von Sebacinsäure mit Adipinsäure enthalten, so kann der Anteil des Polyesters in den Mischungen mit Komponente ii) sogar noch unter die 10 Gew.-% Grenze gesenkt werden.

Die erfindungsgemäßen biologisch abbaubaren Polyestermischungen enthalten darüberhinaus üblicherweise von 0,1 bis 15 Gew.-%, bevorzugt von 0,1 bis 10 Gew.-%, besonders bevorzugt von 0.5 bis 5 Gew.-% Komponente iii, wobei die Gewichtsprozente jeweils auf das Gesamtgewicht der Komponenten i bis ii bezogen sind.

Die erfindungsgemäßen biologisch abbaubaren Polyestermischungen können weitere dem Fachmann bekannte Additive enthalten. Unter Additiven werden insbesondere Stabilisatoren, Nukleierungsmittel, Gleit- und Antikblockmittel wie Stearate (insbesondere Calziumstearat), Wachse wie beispielsweise Bienenwachs oder Bienenwachsester; Weichmittel wie beispielsweise Zitronensäureester (insbesondere Acetyltributylcitrat), Glycerinsäureester wie Triacetylglycerin oder Ethylenglykolderivate; Tenside wie Polysorbate, Palmitate, Laurate; Antistatika, Antifog-Mittel oder Farbstoffe verstanden. Die Additive werden in Konzentrationen von 0 bis 15 Gew.-%, insbesondere 1 bis 10 Gew.-% bezogen auf die erfindungsgemäßen Polyestermischungen eingesetzt.

Als Füllstoffe kommen die eingangs erwähnten anorganischen oder organischen Füllstoff in Betracht. Die Füllstoffe werden in Konzentrationen von 0 bis 50 Gew.-%, insbesondere 1 bis 10 Gew.-% bezogen auf die erfindungsgemäßen Polyestermischungen eingesetzt.

Die Herstellung der erfindungsgemäßen biologisch abbaubaren Polyestermischungen aus den einzelnen Komponenten kann nach bekannten Verfahren erfolgen (EP 792 309 und US 5,883,199).

Beispielsweise können alle Komponenten i, ii und iii in einem Verfahrensschritt in dem Fachmann bekannten Mischvorrichtungen, beispielsweise Knetern oder Extrudern bei erhöhten Temperaturen, beispielsweise von 120°C bis 250°C, gemischt und zur Reaktion gebracht werden. Die Reaktion wird bevorzugt in Gegenwart eines Radikalstarters durchgeführt.

Darüberhinaus wurde ein verbessertes Verfahren zur Herstellung der erfindungsgemäßen biologisch abbaubaren Polyestermischungen gefunden.

Hierzu wird in einem ersten Schritt 1 bis 50 Gew.-%, bevorzugt 5 - 35 Gew.-% Komponente iii mit 50 bis 99 Gew.-% und bevorzugt 65 bis 95 Gew.-% Komponente i bei Temperaturen von 110 bis 145°C - vorzugsweise 120 bis 140°C - zu einem Verzweigerbatch gemischt. Bei diesen Temperaturen wird ein homogener Blend erhalten, ohne dass es zu einem nennenswerten Molekulargewichtsaufbau käme. Der so erhaltene Verzweigerbatch lässt sich bei Raumtemperatur problemlos aufbewahren. In einem zweiten Schritt kann durch Zugabe des Verzweigerbatches zu Komponente ii und gegebenenfalls weiterer Komponente i die gewünschte Zusammensetzung eingestellt werden. Dieser Compoundierungsschritt wird bei 150 bis 250°C - vorzugsweise bei 160 bis 190°C - durchgeführt.

Die Temperaturen im Compoundierungsschritt lassen sich in der Regel senken und damit Zersetzungen empfindlicher Biopolymere wie Polyhydroxybutyrate vermeiden, indem ein Aktivator ausgewählt aus der Gruppe bestehend aus : Zink, Zinn, Titanverbindung und C₁-C₁₂-Alkyltriphenylphosphonium-halogenid eingesetzt wird.

Typische Verzweigerbatches enthalten 5 bis 35 Gew.-%, vorzugsweise 10 bis 20 Gew.-% Komponente iii) und 65 bis 95 Gew.-%, vorzugsweise 80 bis 90 Gew.-% Komonente i. Überraschenderweise haben sich diese Verzweigerbatches als vorteilhaft gegenüber entsprechenden Verzweigerbatches bestehend aus den Komponente ii) und iii) erwiesen. Die Verzweigerbatches sind Gegenstand der vorliegenden Erfindung. Aus den weiter unten aufgeführten Beispielen 4 bis 6 wird deutlich, dass die erfindungsgemäßen Verzweigerbatches aus den Komponenten i) und iii) gegenüber den zum Teil käuflich erhältlichen Verzweigerbatches (z.B. Polylactid und Glycidylmethacrylat) Vorteile hinsichtlich der Fließrate der gebildeten Polyyestermischungen aufweisen. Zudem zeichnen sich die erfindungsgemäßen Verzweigerbatches durch eine hervorragende Lagerstabilität aus.

Beispiele für erfindungsgemäße Verzweigerbatches sind:
Komponente i), Polyester hergestellt durch Kondensation von:
   Adipinsäure/Terephthalsäure und 1,4-Butandiol (z. B. Ecoflex® FBX 7011);
   Adipinsäure/Terephthalsäure und 1,3-Propandiol;
   Bernsteinsäure/Terephthalsäure und 1,4-Butandiol;
   Bernsteinsäure /Terephthalsäure und 1,3-Propandiol;
   Sebacinsäure/Terephthalsäure und 1,4-Butandiol;
   Sebacinsäure/Terephthalsäure und 1,3-Propandiol
   Azelainsäure/Terephthalsäure und 1,4-Butandiol;
   Brassylsäure/Terephthalsäure und 1,4-Butandiol; und
Komponente iii): Glycidyl-styrol(meth)acrylat Copolymer (z.B. Joncryl^{®} ADR 4368 der Fa. Johnson Polymer).

Zur Herstellung von Polyestermischungen mit einem hohen Anteil an "harter" bzw. "spröder" Komponente ii) wie beispielsweise >50 Gew.-% Polyhydroxybutyrat oder insbesondere Polylactid hat sich folgende Fahrweise als besonders vorteilhaft herausgestellt. Es wird wie zuvor beschrieben entweder durch Mischen der Komponenten i), ii) und iii) oder in zwei Schritten durch Mischen eines der obenerwähnten Verzweigerbatches mit Komponente ii) und gegebenenfalls weiterer Komponente i) ein Zwischencompound hergestellt, der vorzugsweise 48 bis 60 Gew.-% Komponente i), 40 bis 50 Gew.-% Komponente ii) und 0,5 bis 2 Gew.-% Komponente iii) enthält. In einem zusätzlichen Schritt wird nun dieser Zwischencompound mit weiterer Komponente ii) versetzt bis der gewünschte Gehalt an Komponente ii) in der Polyestermischung eingestellt ist. Die nach diesem dreistufigen Verfahren hergestellte Polyestermischung eignet sich hervorragend zur Herstellung von biologisch abbaubaren, schlagzähen Polyestermischungen.

Als aliphatische Dicarbonsäure werden Sebacinsäure oder Mischungen von Sebacinsäure mit Adipinsäure bevorzugt eingesetzt, wenn Polymermischungen mit hohem Anteil an "harten" bzw. "spröden" Komponenten ii) wie beispielsweise Polyhydroxybutyrat oder insbesondere Polylactid hergestellt werden.

Aufgrund der Erfahrungen mit anderen Compounds (e.g. Entwicklung von Ecoflex / Stärke-Compounds) wurde der Lösungsansatz - die Verwendung eines Kompatibilizers - variiert. Statt ihn teuer in die gesamte Matrix einzuarbeiten wird nur ein Teil der Ecoflex / PLA-Formulierung mit einem Kompatibilizer-Konzentrat ausgerüstet. Beispiele für einen sogenannten Kompatibilizer-Batch sind die oben bereits erwähnten Verzweigerbatches und Zwischencompounds. Damit werden Kompoundierkosten eingespart:
9,5-89,5 Gew.-% Ecoflex, 89,5-9,5 Gew.-% PLA, 0,5-20 Gew.-% Verzweiger-Batch, 0-15 Gew.-% Additive (wie z.B. Palmitate, Laurate, Stearate, PEG, Citrate und/oder Glycerinderivate) und 0 bis 50 Gew.-% Füllstoffe (Kreide, Talkum, Kaolin, Silica etc.)
29,5-59,5 Gew.-% Ecoflex, 59,5-29,5 Gew.-% PLA, 0,5-20 Gew.-% Verzweiger-Batch, 0-15 Gew.-% Additive (wie z.B. Palmitate, Laurate, Stearate, PEG, Citrate und/oder Glycerinderivate) und 0 bis 50 Gew.-% Füllstoffe (Kreide, Talkum, Kaolin, Silica)

Die erfindungsgemäßen biologisch abbaubaren Polyestermischungen sind besonders zur Herstellung von, Formteilen, Folien oder Fasern geeignet. Die Herstellung kann nach dem Fachmann bekannten Methoden erfolgen.

Ein besonderes Anwendungsgebiet der biologisch abbaubaren Polyestermischungen mit verbesserten Abbauraten betrifft die Verwendung zur Herstellung von Folien, insbesondere Mulchfolien für die Agrarwirtschaft. Solche Mulchfolien werden zum Schutz und zur Wachstumsbeschleunigung meist junger Setzlinge auf landwirtschaftlichen Flächen ausgebracht. Nach der Ernte werden diese Mulchfolien auf der landwirtschaftlichen Fläche belassen oder - bei biologisch abbaubaren Mulchfolien - untergepflügt. Bis zum Beginn der nächstjährigen Aussaat ist ein weitgehender biologische Abbau dieser Mulchfolien notwendig

Mit Hilfe der erfindungsgemäßen biologisch abbaubaren Polyestermischungen werden biologisch abbaubare Polymermischungen erhalten, die sich problemlos (blasenstabil) zu durchstoßfesten Folien verarbeiten lassen.

### Beispiele:

### Anwendungstechnische Messungen:

Das Molekulargewicht Mₙ der teilaromatischen Polyester wurde wie folgt bestimmt:
15 mg der teilaromatischen Polyester wurden in 10 ml Hexafluoroisopropanol (HFIP) gelöst. Jeweils 125 µl dieser Lösung wurden mittels Gelpermeationschromatographie (GPC) analysiert. Die Messungen wurden bei Raumtemperatur durchgeführt. Für die Elution wurde HFIP + 0,05 Gew.-% Trifluoroessigsäure-Ka-Salz verwendet. Die Elutionsgeschwindigkeit betrug 0,5 ml/min. Dabei wurde folgende Säulenkombination verwendet (alle Säulen hergestellt von Fa. Showa Denko Ltd., Japan): Shodex^{®} HFIP-800P (Durchmesser 8 mm, Länge 5 cm), Shodex^{®} HFIP-803 (Durchmesser 8 mm, Länge 30 cm), Shodex^{®} HFIP-803 (Durchmesser 8 mm, Länge 30 cm). Die teilaromatischen Polyester wurden mittels eines RI-Detektors (Differential-Refraktometrie) detektiert. Die Kalibrierung erfolgte mit eng verteilten Polymethylmethacrylat-Standards mit Molekulargewichten von Mₙ = 505 bis Mₙ = 2.740.000. Außerhalb dieses Intervalls liegende Elutionsbereiche wurden durch Extrapolation bestimmt.

Die Schmelztemperaturen der teilaromatischen Polyester wurden durch DSC Messungen mit einem Gerät Exstet DSC 6200R der Fa. Seiko bestimmt:
10 bis 15 mg der jeweiligen Proben wurden unter einer Stickstoffatmosphäre mit einer Aufheizrate von 20°C/min von -70°C auf 200°C aufgeheizt. Als Schmelztemperaturen der Proben wurden die Peaktemperaturen des dabei beobachteten Schmelzpeaks angegeben. Als Referenz wurde jeweils ein leerer Probentiegel verwendet.

Die Homogenität der Mischungen der Komponenten i, ii, und iii sowie der zum Vergleich hergestellten Mischungen wurde bestimmt, indem diese Mischungen bei 190°C jeweils zu Folien mit einer Dicke von 30 µm gepresst wurden. Der Anteil nicht dispergiert vorliegender Komponente ii in diesen Folien wurde durch Augenscheinnahme beurteilt.

Die Abbauraten der biologisch abbaubaren Polyestermischungen und der zum Vergleich hergestellten Mischungen wurden wie folgt bestimmt

Aus den biologisch abbaubaren Polyestermischungen und den zum Vergleich hergestellten Mischungen wurden durch Pressen bei 190°C jeweils Folien mit einer Dicke von 30 µm hergestellt. Diese Folien wurden jeweils in quadratische Stücke mit einer Kantenlänge von 20 cm geschnitten. Das Gewicht dieser Folienstücke wurde jeweils bestimmt und als "100 Gew.-%" definiert. Über einen Zeitraum von vier Wochen wurden die Folienstücke in einem Klimaschrank auf eine mit Erdboden gefüllte Wanne gelegt, wobei der Erdboden eine einmal täglich kontrollierte Bodenfeuchtigkeit von ca. 40 % bezogen auf die maximale Wasseraufnahmefähigkeit des Erdbodens hatte. Während dieser vier Wochen wurden im Klimaschrank konstante Umgebungsbedingungen eingestellt: eine Temperatur von 30°C, eine relative Luftfeuchtigkeit von ca. 50% und eine durch ein Schnellbelichtungsgerät SUNTEST der Fa. Heraeus erzeugte Bestrahlung der Folien in einem Wellenlängenbereich von 300 bis 800 nm mit einer Bestrahlungsstärke von 765 W/m². Im Wochenabstand wurde jeweils das verbleibende Gewicht der Folienstücke gemessen und auf Gew.-% (bezogen auf das zu Versuchsbeginn ermittelte und als "100 Gew.-%" definierte Gewicht) umgerechnet.

### Einsatzstoffe:

### Komponente i:

i-1: Zur Herstellung des Polyesters i-1 wurden 87,3 kg Dimethylterephthalat, 80,3 kg Adipinsäure, 117 kg 1,4-Butandiol und 0,2 kg Glycerin zusammen mit 0,028 kg Tetrabutylorthotitanat (TBOT) gemischt, wobei das Molverhältnis zwischen Alkoholkomponenten und Säurekomponente 1,30 betrug. Das Reaktionsgemisch wurde auf eine Temperatur von 180°C erhitzt und bei dieser Temperatur 6h lang umgesetzt. Anschließend wurde die Temperatur auf 240°C erhöht und die überschüssige Dihydroxyverbindung unter Vakuum über einen Zeitraum von 3h abdestilliert. Anschließend wurden bei 240°C 0,9 kg Hexamethylendiisocyanat innerhalb 1h langsam zudosiert.

Der so erhaltene Polyester i-1 wies eine Schmelztemperatur von 119°C und ein Molekulargewicht (Mₙ) von 23000 g/mol auf (entspricht Ecoflex^{®} FBX 7011, hergestellt von BASF Aktiengesellschaft).

### Komponente ii:

ii-1: aliphatischer Polyester, Polylactid Natureworks^{®} 2000D der Fa. Cargill-Dow.

### Komponente iii:

iii-1: Joncryl^{®} ADR 4368 der Fa. Johnson Polymer.
iii-2: ESBO: Epoxidiertes Sojabohnenöl (z.B. Merginat^{®} ESBO von Hobum, Hamburg, oder Edenol^{®} B 316 von Cognis, Düsseldorf). (Vergleichsbeispiel)

### Weitere Komponenten:

Additiv: Erucasäureamid, Ethylenbisstearylamid,

### Beispiele 1 bis 3)

| Beispiel | Komponente i | Komponente ii | Komponente iii-1 | Komponente iii-2 |
|---|---|---|---|---|
| Bsp-1 (Vergleich) | 39 Gew.-% | 60 Gew.-% | | 1 Gew.-% ESBO |
| | Komponte i-1 | Polylactid | - | |
| | (Ecoflex^{®} | F) Komp. ii-1 | | |
| Bsp-2 | 38,8 Gew.-% | 60 Gew.-% | 0,2 Gew.-% Joncryl | 1 Gew.-% |
| | Komponte i-1 | Komp. ii-1 | Komp. iii-1 | ESBO |
| Bsp-3 | 54,8 Gew.-% | 44 Gew.-% | 0,2 Gew.-% Joncryl | 1 Gew.-% |
| | Komponte i-1 | Komp. ii-1 | Komp. iii-1 | ESBO |

Die Mischung des erfindungsgemäßen Beispiels 2 unterscheidet sich von derjenigen des Beispiels 1 lediglich durch den Zusatz von 0,2 Gew.-% Komponente iii-1 (Joncryl^{®} ADR 4368 der Fa. Johnson Polymer). Komponente iii-1 wurde in Form eines 20% Gew.-% igen Verweigerbatches dispergiert iri Komponente i-1 zugegeben (insgesamt wurden lediglich 1 Gew.-% des Verzweigerbatches der obigen Mischung zugegeben). Durch die Zugabe der Komponente iii wurde bei der Schlauchfolienextrusion von ca. 30 - 40 µm dicken Folien die Blasenstabilität, und die Weiterreißfestigkeit quer zur Extrusionsrichtung weiter verbessert.

Im erfindungsgemäßen Beispiel 3 wurde der Anteil an Komponente i erhöht (und der Anteil der Komponente ii) verringert. Es bildete sich eine kontinuierliche Phase an Komponente i aus. Eine derartige Folie wies eine deutlich höhere Blasenstabilität auf.

| Beispiel | Weiterreißfestigkeit quer | Foliendicke | Blasenstabilität |
|---|---|---|---|
| -Bsp-1 | 19 N/mm | 35+7µm | Abrisse, Locheinfall Blase "tanzt", Falten |
| Bsp-2 | 27 N/mm | 32+7 µm | Falten |
| Bsp-3 | 32 N/mm | 37+4 µm | Weniger Falten als im Beispiel 2 |

Herstellung und Prüfung erfindungsgemäßer Polyestermischungen über verschiedene Verzweigerbatches Beispiele 4) bis 6):
Schritt 1: Herstellung der Verzweigerbatches

| Verzweigerbatch | Komponente i | Komponente ii | Komponente iii |
|---|---|---|---|
| V-A | | 90 % Polylaktid | 10 % Joncryl ADR 4368 |
| V-B | 80 % Ecoflex F | | 20 % Joncryl ADR 4368 |
| V-C | 70 % Ecoflex F | | 30 % Joncryl ADR 4368 |

Schritt 2: Compoundierung der erfindungsgemäßen Polyestermischungen

### Vorschrift für Compoundierung

Auf einer Berstorff ZE 40, einem gleichläufigem, selbstreinigenden Doppelschneckenextruder mit Entgasung nach Zone 9 wurden Mischungen aus Ecoflex, PLA, Gleitmittelbatch und Verzweigerbatch bei folgendem Temperaturprofil gefahren:

### Zusammensetzungen:

Beispiel 4) Ecoflex/PLA

| | |
|---|---|
| 53 % | NatureWorks® 4042 D |
| 40 % | Ecoflex® F BX 7011 |
| 5 % | EBS-Masterbatch auf PLA-Basis mit 10 % Ethylenbisstearylamid |
| 2 % | V-A: Verzweigerbatch auf PLA-Basis |

Beispiel 5) Ecoflex/PLA

| | |
|---|---|
| 60 % | NatureWorks® 4042 D |
| 38 % | Ecoflex® F BX 7011 |
| 1 % | Ecoflex Batch SL 1 mit 10 % Erucasäuremid |
| 1 % | V-B: Verzweigerbatch auf Ecoflex-Basis |

Beispiel 6) Ecoflex/PLA

| | |
|---|---|
| 60 % | NatureWorks® 4042 D |
| 38 % | Ecoflex® F BX 7011 |
| 1 % | Ecoflex Batch SL 1 mit 10 % Erucasäuremid |
| 1 % | V-C: Verzweigerbatch auf Ecoflex-Basis |

Diese Rezepturen wurden auf der ZE 40 compoundiert.

Die Beurteilung des Prozeßverhaltens bei der Schlauchfolienextrusion wurde an einer Laboranlage mit einem Schneckendurchmesser von 60 mm durchgeführt. Der Schlauchkopf enthält einen Wendelverteiler mit 8 Wendeln. Die Düse hat einen Durchmesser von 190 mm und einen Spalt von 1,2 mm. Ausgehend von einem Temperaturprofil mit 160-165°C Zylindertemperatur und 180-185°C Düsentemperatur, wurden die Folie mit insgesamt eingeschränkter Blasenstabilität gefahren, da das Polylactid mit der bekannten, niedrigen Schmelzefestigkeit die kontinuierliche Phase im Ecoflex/PLA-Compound darstellt.

Die mechanischen Messungen ergeben folgende Ergebnisse

| Eigenschaft | Beispiel 4 | Beispiel 5 | Beispiel 6 |
|---|---|---|---|
| E-modul parallel | 1681 MPa | 1632 MPa | 1525 MPA |
| E-Modul senkrecht | 1106 MPa | 1244 MPa | 990 MPa |
| Reißdehnung parallel | 326 % | 332 % | 160 % |
| Reißdehnung senkrecht | 102 % | 135 % | 31 % |
| Weiterreißfestigkeit quer | 41 N/mm | 40 N/mm | 43 N/mm |
| Foliendicke | 30+8 µm | 29+6 µm | 31+6 µm |

Beispiele 4 und 5 haben trotz unterschiedlicher Träger des Verzweigerbatches sehr ähnliche mechanische Eigenschaften. Die Dickenverteilung ist günstiger, wenn Ecoflex als Träger verwendet wird. Die Unterschiede sind aber sehr klein. Beispiel 6 hat einen um 50 % höheren Verzweigeranteil als die Beispiele 4 und 5. Dadurch nimmt die Reißdehnung ab. Die Blasenstabilität ist aufgrund des niedrigen MVR's deutlich höher als bei den Beispielen 4 und 5.

Die Prüfungen der Fließfähigkeit mittels der Melt Volume Rate (MVR) nach ISO 1133 ergeben folgendes Bild:

| | |
|---|---|
| Bsp. 4: | MVR = 3,0 ml /10 min. |
| Bsp. 5: | MVR = 1,2 ml /10 min. |
| Bsp. 6: | MVR = 0,6 ml /10 min. |

bei Beispiele 4 und 5 weisen im Ecoflex/PLA-Compound die gleiche Konzentration von Joncryl ADR 4368 auf. Überraschenderweise zeigt Beispiel 5 einen deutlich niedrigeren MVR. Ein Verzweigerbatch auf Basis von Ecoflex weist demnach Vorteile gegenüber einem Verzweigerbatch auf PLA Basis auf.

Ein weiterer Vorteil des Trägermaterials Ecoflex für den Verzweiger im Ecoflex Batch FBA gegenüber PLA als Trägermaterial besteht im höhern Prozentsatz von PLA der beigemischt werden kann, ohne die vorteilhafte kohärente Ecoflex-Phase im Compound aufzugeben. Außerdem führt der Batch mit Ecoflex als Trägermaterial für den Verzweiger bei gleichen Compoundierbedingungen zu einem deutlich niedrigeren Stippenpegel als der Batch mit PLA als Trägermaterial für den Verzweiger.

### Beispiel 7 (Blends mit PHB)

Auf einem linksdrehenden Zweiwellenkneter mit 40 mm Durchmesser wurde ein Compound gefahren, der folgenden Komponenten enthält:
- 63,7 % Ecoflex^{®} F BX 7011 (BASF Aktiengesellschaft)
- 16,0 % Polyhydroxybutyrat (Biocycle^{®} PHB 94 der Fa. PHB Industrial S/A)
- 8,4 % PLA (NatureWorks^{®} 4041 D, Cargill Dow)
- 6,0 % Calciumcarbonat (Hydrocarb OG)
- 4,2 % Titandioxid (Kronos 2200, Bayer AG)
- 0,4 % Polyethylenglykol (Pluriol^{®} 1500, BASF Aktiengesellschaft)
- 0,4 % Gleitmittel (Edenol^{®} D 82, Cognis)
- 0,4 % Verzweiger (Joncryl^{®}, ADR 4368 der Fa. Johnson Polymer) [Der Verzweiger wird im Mischungsverhältnis Joncryl/Ecoflex von 10/90 compoundiert und in Granulatform im Compound verwendet (4,0 Gew.-%).
- 0,5 % Zinkstearat (Zincum PS)

Die Komponenten werden vorgetrocknet, trocken vorgemischt und über den Granulattrichter eingebracht. Die folgenden Prozessparameter werden vorgegeben:

| | |
|---|---|
| Massetemperatur: | ca. 160°C |
| Drehzahl: | 150 1/min. |
| Durchsatz: | 30 kg/h |

Auf einer Schlauchfolienanlage mit einem Schneckendurchmesser von 40 mm mit genuteter Einzugszone und einem Düsenkopf mit 150 mm Durchmesser und 0,8 mm Spaltweite wurde der Compound zu Schlauchfolien für Tragetaschen mit 60 µm Dicke verarbeitet.

Dabei wurden die folgenden Prozessparameter verwendet:

| | |
|---|---|
| Drehzahl: | 731/min |
| Durchsatz: | 27 kg/h |
| Druck: | 135 bar |
| Abzug: | 5,4 m/min. Abzugsgeschwindigkeit |

| | |
|---|---|
| Zylindertemp. | 150/160/165°C am Extruder |
| Kopftemp. | 170/165/165°C |

Aufgrund der relativ niedrigen Viskosität der PHB-Komponente ist trotz relativ niedriger Zylinderzonen nur eine mäßige Blasenstabilität zu erzielen. Sie wird durch Absenkung der Zonentemperaturen um 10-15°C deutlich verbessert.

Die Folie aus dem Ecoflex/PHB-Compound hat bei 60 µm Dicke die folgenden mechanischen Eigenschaften:

| Prüfung | Einheit | Norm | Ecoflex/PHB/PLA |
|---|---|---|---|
| Dicke, (Mittelwert) | µm | | 61 |
| Zugversuch, parallel | Mpa | ISO 527 | 502 |
| Reißfestigkeit, parallel | Mpa | ISO 527 | 27,7 |
| Reißdehnung, parallel | % | ISO 527 | 419 |
| | | | |
| Zugversuch, senkrecht | Mpa | ISO 527 | 301 |
| Reißfestigkeit, senkrecht | Mpa | ISO 527 | 26,8 |
| Reißdehnung, senkrecht | % | ISO 527 | 540 |
| | | | |
| Durchstoßfestigkeit | N/mm | DIN 53373 | 26,6 |
| | | | |

## Patentansprüche

1. Biologisch abbaubare Polyestermischung, umfassend
i) 5 bis 80 Gew.-%, bezogen auf das Gesamtgewicht der Komponenten i bis ii, mindestens eines Polyesters auf Basis von aliphatischen und aromatischen Dicarbonsäuren und aliphatischen Dihydroxyverbindung, und
ii) 20 bis 95 Gew.-%, bezogen auf das Gesamtgewicht der Komponenten i bis ii, mindestens eines biologisch abbaubarer Homo- oder Copolyester ausgewählt aus der Gruppe bestehend aus Polylactid, Polyhydroxyalkanoate und Polyester aus aliphatischen Dicarbonsäuren und aliphatischen Diolen, und
iii) 0,1 bis 15 Gew.-%, bezogen auf das Gesamtgewicht der Komponenten i bis ii, eines Copolymers aus Styrol und Glycidyl(meth)acrylaten, und
iv) 0 bis 15 Gew.-% Additiv, und
v) 0 bis 50 Gew.-% anorganischer oder organischer Füllstoff.

2. Biologisch abbaubare Polyestermischung nach Anspruch 1, wobei Komponente i aufgebaut ist aus:
A) einer Säurekomponente aus
a1) 30 bis 99 mol-% mindestens einer aliphatischen oder mindestens einer cycloaliphatischen Dicarbonsäure oder deren esterbildende Derivate oder Mischungen davon
a2) 1 bis 70 mol-% mindestens einer aromatischen Dicarbonsäure oder deren esterbildendem Derivat oder Mischungen davon und
a3) 0 bis 5 mol-% einer sulfonatgruppenhaltigen Verbindung,
wobei die Molprozente der Komponenten a1) bis a3) zusammen 100% ergeben und
B) einer Diolkomponente aus mindestens einem C₂-bis C₁₂-Alkandiol oder einem C₅- bis C₁₀-Cycloalkandiol oder Mischungen davon
und gewünschtenfalls darüber hinaus eine oder mehrere Komponenten ausgewählt aus
c) einer Komponente ausgewählt aus
c1) mindestens einer Etherfunktionen enthaltenden Dihydroxyverbindung der Formel I
HO-[(CH₂)ₙ-O]ₘ-H (I)
in der n für 2, 3 oder 4 und m für eine ganze Zahl von 2 bis 250 stehen,
c2) mindestens einer Hydroxycarbonsäure der Formel IIa oder IIb 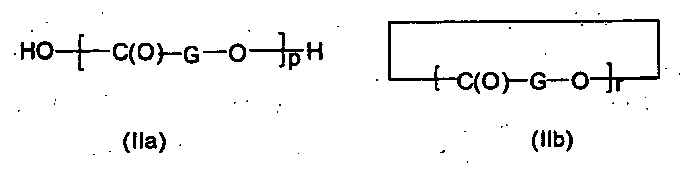 in der p eine ganze Zahl von 1 bis 1500 und r eine ganze Zahl von 1 bis 4 bedeuten, und G für einen Rest steht, der ausgewählt ist aus der Gruppe betstehend aus Phenylen, -(CH₂)_{q}-, wobei q eine ganze Zahl vor 1 bis 5 bedeutet, -C(R)H- und -C(R)HCH₂, wobei R für Methyl oder Ethyl steht
c3) mindestens einem Amino-C₂- bis C₁₂-alkanol oder mindestens einem Amino-C₅-bis C₁₀-cycloalkanol oder Mischungen davon
c4) mindestens einem Diamino-C₁- bis C₈-Alkan
c5) mindestens einem 2,2'-Bisoxazolins der allgemeinen Formel III 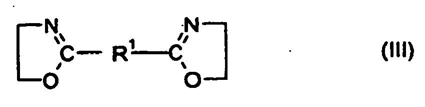 wobei R¹ eine Einfachbindung, eine (CH₂)_{z}-Alkylengruppe, mit z = 2, 3 oder 4, oder eine Phenylengruppe bedeutet
c6) mindestens einer Aminocarbonsäure ausgewählt aus der Gruppe, bestehend aus den natürlichen Aminosäuren, Polyamiden, erhältlich durch Polykondensation einer Dicarbonsäure mit 4 bis 6 C-Atomen und einem Diamin mit 4 bis 10 C-Atomen, Verbindungen der Formeln IV a und IVb 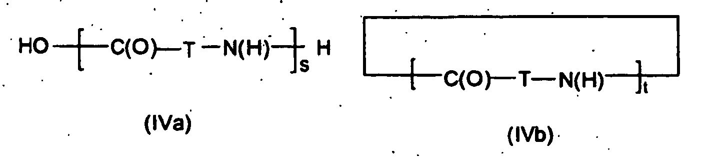
in der s eine ganze Zahl von 1 bis 1500 und t eine ganze Zahl von 1 bis 4 bedeuten, und T für einen Rest steht, der ausgewählt ist aus der Gruppe bestehend aus Phenylen, -(CH₂)ᵤ-, wobei u eine ganze Zahl von 1 bis 12 bedeutet, -C(R²)H- und -C(R²)HCH₂, wobei R² für Methyl oder Ethyl steht,
und Polyoxazolinen mit der wiederkehrenden Einheit V 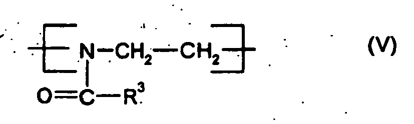 in der R³ für Wasserstoff, C₁-C₆-Alkyl, C₅-C₈-Cyclalkyl, unsubstituierten oder mit C₁-C₄-Alkylgruppen bis zu dreifach substituiertes Phenyl oder für Tetrahydrofuryl steht,
oder Mischungen aus c1) bis c6)
und
D) einer Komponente ausgewählt aus
d1) mindestens einer Verbindung mit mindestens drei zur Esterbildung befähigten Gruppen,
d2) mindestens eines Isocyanates
d3) mindestens eines Divinylethers
oder Mischungen aus d1) bis d3).

3. Biologisch abbaubare Polyestermischung nach Anspruch 2, wobei in Komponente i):
die aliphatische oder cycloaliphatische Dicarbonsäure (Komponente a1)) Bernsteinsäure, Adipinsäure oder Sebacinsäure, deren Ester bildende Derivate oder Mischungen davon bedeutet;
die aromatische Dicarbonsäure (Komponente a2)) Terephthalsäure oder deren Ester bildende Derivate bedeutet, und
die Diolkomponente (Komponente B) 1,4-Butandiol oder 1,3-Propandiol bedeutet.

4. Biologisch abbaubare Polyestermischung nach den Ansprüchen 1 bis 3, wobei Komponente ii: Polylactid, Poly-β-hydroxybutyrat oder Poly-β-hydroxy-butyratcovalerat ist.

5. Biologisch abbaubare Polyestermischung nach Anspruch 1, enthaltend als Komponente ii 60 bis 95 Gew.-% Polyhydroxybutyrat oder Polylactid.

6. Biologisch abbaubare Polyestermischung nach den Ansprüchen 1 bis 4, umfassend
15 bis 80 Gew.-% Komponente i und
85 bis 20 Gew.-% Komponente ii,
jeweils bezogen auf das Gesamtgewicht der Komponenten i bis ii.

7. Biologisch abbaubare Polyestermischung nach Anspruch 6, umfassend
40 bis 60 Gew.-% Komponente i und
60 bis 40 Gew.-% Komponente ii,
jeweils bezogen auf das Gesamtgewicht der Komponenten i bis ii.

8. Biologisch abbaubare Polyestermischung nach Anspruch 1, wobei Komponente i eine kontinuierliche oder kokontinuierliche Phase ausbildet.

9. Biologisch abbaubare Polyestermischung nach Anspruch 1, wobei Komponente i eine kontinuierliche Phase ausbildet.

10. Biologisch abbaubare Polyestermischung nach den Ansprüchen 1 bis 9, umfassend 0,1 bis 10 Gew.-% Komponente iii, bezogen auf das Gesamtgewicht der Komponenten i bis ii.

11. Verfahren zur Herstellung von biologisch abbaubaren Polyestermischungen gemäß den Ansprüchen 1 bis 10, **dadurch gekennzeichnet; dass** die Komponenten i, ii und iii in einem Schritt gemischt und zur Reaktion gebracht werden.

12. Verfahren zur Herstellung von biologisch abbaubaren Polyestermischungen gemäß den Ansprüchen 1 bis 10, **dadurch gekennzeichnet, dass** in einem ersten Schritt 5 bis 35 Gew.-% Komponente iii mit 65 bis 95 Gew.-% Komponente i zu einem Verzweigerbatch bei Temperaturen im Bereich von 110 bis 145 °C gemischt werden und, in einem zweiten Schritt, diesem Verzweigerbatch Komponente ii und gegebenenfalls weitere Komponente i zugemischt werden und die erhaltene Mischung aus den Komponenten i, ii und iii bei Temperaturen von 150 bis 250°C zur Reaktion gebracht wird.

13. Verfahren zur Herstellung von biologisch abbaubaren Polyestermischungen nach Anspruch 11 oder 12, **dadurch gekennzeichnet, dass** in einem zusätzlichen Schritt (3) weitere Komponente ii) zugegeben wird.

14. Verfahren zur Herstellung von biologisch abbaubaren Polyestermischungen mit einem Anteil von > 50 Gew.-% Polyhydroxybutyrat oder Polylactid (Komponente ii)
a) durch Herstellung eines Zwischencompounds, der 48 bis 60 Gew.-% Komponente i, 40 bis 50 Gew.-% Komponente ii und 0,5 bis 2 Gew.-% Komponente iii enthält, wobei die Komponenten i und iii wie in Anspruch 1 definiert sind und
b) dieser Zwischencompound mit weiterer Komponente ii versetzt wird, bis der gewünschte Gehalt an Komponente ii in der Polyestermischung eingestellt ist.

15. Biologisch abbaubare Polyestermischungen erhältlich gemäß Anspruch 14.

16. Verfahren zur Herstellung von biologisch abbaubaren Polyestermischungen, nach den Ansprüchen 11 bis 13, dass in einem der Schritte (1) bis (3) oder im gemeinsamen Schritt polymere oder oligomere Sebacinsäure-1,3-propionat und/oder Sebacinsäure-1,4-butanoat zugegeben werden.

17. Verzweigerbatch, enthaltend
5 bis 35 Gew.-% Komponente iii, definiert wie in Anspruch 1 und
65 bis 95 Gew.-% Komponente i, definiert wie in Anspruch 1 bis 3.

18. Verzweigerbatch nach Anspruch 17, enthaltend
10 bis 20 Gew.-% Komponente iii und
80 bis 90 Gew.-% Komponente i.

19. Verwendung der biologisch abbaubaren Polyestermischungen gemäß den Ansprüchen 1 bis 10 zur Herstellung von Formteilen, Folien oder Fasern.

20. Formteile, Folien oder Fasern, umfassend biologisch abbaubare Polyestermischungen gemäß den Ansprüchen 1 bis 10.

21. Formteile, Folien oder Fasern, hergestellt nach einem Verfahren gemäß Anspruch 13.

## Claims

1. A biodegradable polyester mixture, comprising
i) from 5 to 80% by weight, based on the total weight of components i to ii, of at least one polyester based on aliphatic and aromatic dicarboxylic acids and on aliphatic dihydroxy compounds, and
ii) from 20 to 95% by weight, based on the total weight of components i to ii, of at least one biodegradable homo- or copolyester selected from the group consisting of polylactide, polyhydroxyalkanoates, and polyesters composed of aliphatic dicarboxylic acids and of aliphatic diols, and
iii) from 0.1 to 15% by weight, based on the total weight of components i to ii, of a copolymer composed of styrene and of glycidyl (meth)acrylates; and
iv) from 0 to 15% by weight of additive, and
v) from 0 to 50% by weight of inorganic or organic filler.

2. The biodegradable polyester mixture according to claim 1, where component i is composed of:
A) an acid component composed of
a1) from 30 to 99 mol% of at least one aliphatic, or at least one cycloaliphatic, dicarboxylic acid, or its ester-forming derivatives, or a mixture of these
a2) from 1 to 70 mole% of at least one aromatic dicarboxylic acid, or its ester-forming derivative, or a mixture of these, and
a3) from 0 to 5 mol% of a compound comprising sulfonate groups,
where the molar percentages of components a1) to a3) together give 100%, and
B) a diol component composed of at least one C₂-C₁₂ alkanediol or one C₅-C₁₀ cycloalkanediol, or a mixture of these,
and, if desired, also one or more components selected from
C) a component selected from the group consisting of
c1) at least one dihydroxy compound comprising ether functions and having the formula I
HO-[(CH₂)ₙ-O]ₘ-H (I)
where n is 2, 3 or 4 and m is a whole number from 2 to 250,
c2) at least one hydroxycarboxylic acid of the formula IIa or IIb 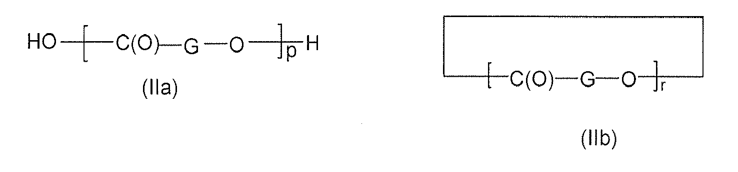 where p is a whole number from 1 to 1500 and r is a whole number from 1 to 4, and G is a radical selected from the group consisting of phenylene, -(CH₂)_{q}-, where q is a whole number from 1 to 5, -C(R)H- and -C(R)HCH₂, where R is methyl or ethyl,
c3) at least one amino-C₂-C₁₂ alkanol, or at least one amino-C₅-C₁₀ cycloalkanol, or a mixture of these,
c4) at least one diamino-C₁-C₈ alkane,
c5) at least one 2,2'-bisoxazoline of the formula III 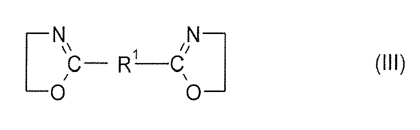 where R¹ is a single bond, a (CH₂)_{z}-alkylene group, where z = 2, 3 or 4, or a phenylene group, and
c6) at least one aminocarboxylic acid selected from the group consisting of the naturally occurring amino acids, polyamides obtainable by polycondensing a dicarboxylic acid having from 4 to 6 carbon atoms with a diamine having from 4 to 10 carbon atoms, compounds of the formulae IVa and IVb 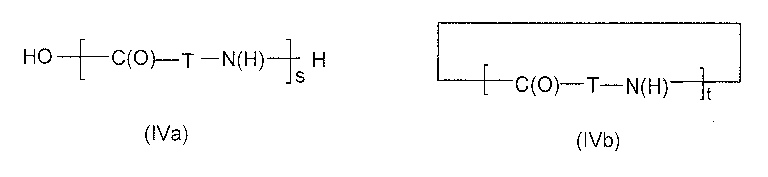 where s is an integer from 1 to 1500 and t is a whole number from 1 to 4, and T is a radical selected from the group consisting of phenylene, -(CH₂)ᵤ-, where u is a whole number from 1 to 12, -C(R²)H- and -C(R²)HCH₂-, where R² is methyl or ethyl,
and polyoxazolines having the repeat unit V 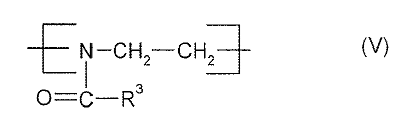 where R³ is hydrogen, C₁-C₆-alkyl, C₅-C₈-cycloalkyl, phenyl, either unsubstituted or with up to three C₁-C₄-alkyl substituents, or tetrahydrofuryl,
or a mixture composed of c1) to c6),
and of
D) a component selected from
d1) at least one compound having at least three groups capable of ester formation,
d2) at least one isocyanate, and
d3) at least one divinyl ether,
or a mixture composed of d1) to d3).

3. The biodegradable polyester mixture according to claim 2, where in component i):
the aliphatic or cycloaliphatic dicarboxylic acid (component a1)) is succinic acid, adipic acid, or sebacic acid, ester-forming derivatives thereof, or mixtures of these;
the aromatic dicarboxylic acid (component a2)) is terephthalic acid or its ester-forming derivatives, and
the diol component (component B) is 1,4-butanediol or 1,3-propanediol.

4. The biodegradable polyester mixture according to claims 1 to 3, where component ii is: polylactide, poly-β-hydroxybutyrate or poly-β-hydroxybutyrate-co-valerate.

5. The biodegradable polyester mixture according to claim 1, comprising as component ii from 60 to 95% by weight of polyhydroxybutyrate or polylactide.

6. The biodegradable polyester mixture according to claims 1 to 4, comprising
from 15 to 80% by weight of component i and
from 85 to 20% by weight of component ii,
based in each case on the total weight of components i to ii.

7. The biodegradable polyester mixture according to claim 6, comprising
from 40 to 60% by weight of component i and
from 60 to 40% by weight of component ii,
based in each case on the total weight of components i to ii.

8. The biodegradable polyester mixture according to claim 1, where component i forms a continuous or cocontinuous phase.

9. The biodegradable polyester mixture according to claim 1, where component i forms a continuous phase.

10. The biodegradable polyester mixture according to claims 1 to 9, comprising from 0.1 to 10% by weight of component iii, based on the total weight of components i to ii.

11. A process for preparation of biodegradable polyester mixtures according to claims 1 to 10, which comprises, in one step, mixing components i, ii, and iii, and reacting these.

12. A process for preparation of biodegradable polyester mixtures according to claims 1 to 10, which comprises, in a first step, mixing from 5 to 35% by weight of component iii with from 65 to 95% by weight of component i at temperatures in the range from 110 to 145 °C to give a branching agent masterbatch, and, in a second step, admixing component ii and, if appropriate, further component i with this branching agent masterbatch, and reacting the resultant mixture composed of components i, ii, and iii at temperatures of from 150 to 250°C.

13. The process for preparation of biodegradable polyester mixtures according to claim 11 or 12, wherein further component ii) is added in an additional step (3).

14. A process for preparation of biodegradable polyester mixtures with > 50% by weight content of polyhydroxybutyrate or of polylactide (component ii)
a) via preparation of an intermediate compounded material which comprises from 48 to 60% by weight of component i, from 40 to 50% by weight of component ii, and from 0.5 to 2% by weight of component iii, where the definition of components i and iii is as in claim 1, and
b) admixing further component ii with this intermediate compounded material until the desired content of component ii in the polyester mixture has been achieved.

15. A biodegradable polyester mixture obtainable according to claim 14.

16. The process for preparation of biodegradable polyester mixtures according to claims 11 to 13, wherein, in one of the steps (1) to (3), or in the collective step, polymeric or oligomeric 1,3-propionate of sebacic acid and/or 1,4-butanoate of sebacic acid are added.

17. A branching agent masterbatch, comprising
from 5 to 35% by weight of component iii, defined as in claim 1, and
from 65 to 95% by weight of component i, defined as in claim 1 to 3.

18. The branching agent masterbatch according to claim 17, comprising
from 10 to 20% by weight of component iii, and
from 80 to 90% by weight of component i.

19. The use of the biodegradable polyester mixture according to claims 1 to 10 for production of moldings, of foils, or of fibers.

20. A molding, a foil, or a fiber, comprising biodegradable polyester mixtures according to claims 1 to 10.

21. A molding, a foil or a fiber produced by a process according to claim 13.

## Revendications

1. Mélange de polyesters, biodégradable, comprenant :
i) 5 à 80 % en poids, par rapport au poids total des composants i et ii, d'au moins un polyester à base d'acides dicarboxyliques aliphatiques et aromatiques et d'un composé dihydroxylé aliphatique, et
ii) 20 à 95 % en poids, par rapport au poids total des composants i et ii, d'au moins un homopolyester ou copolyester biodégradable, choisi dans le groupe constitué du polylactide, des polyhydroxy-alcanoates et d'un polyester à base d'acides dicarboxyliques aliphatiques et de diols aliphatiques, et
iii) 0,1 à 15 % en poids, par rapport au poids total des composants i et ii, d'un copolymère à base de styrène et de (méth)acrylates de glycidyle, et
iv) 0 à 15 % en poids d'un additif, et
v) 0 à 50 % en poids d'une charge inorganique ou organique.

2. Mélange de polyesters, biodégradable, selon la revendication 1, dans lequel le composant i est
A) d'un composant d'acide constitué de :
a1) 30 à 99 % en mole d'au moins un acide dicarboxylique aliphatique ou d'au moins un acide dicarboxylique cycloaliphatique ou de leurs dérivés pouvant former des esters, ou de leurs mélanges,
a2) 1 à 70 % en mole d'au moins un acide dicarboxylique aromatique ou de son dérivé pouvant former des esters, ou des mélanges de ceux-ci, et
a3) 0 à 5 % en mole d'un composé contenant des groupements sulfonate,
les pourcentages en mole des composants a1) à a3) représentant, considérés ensemble, 100 %, et
B) d'un composant de diol constitué d'au moins un alcanediol en C₂-C₁₂ ou d'un cycloalcanediol en C₅-C₁₀ ou de leurs mélanges,
et, éventuellement, d'encore un ou plusieurs composants, sélectionnés parmi :
C) un composant, choisi parmi :
c1) au moins un composé dihydroxylé contenant au moins une fonction éther, de formule I :
HO-[(CH₂)ₙ-O]ₘ-H (I)
dans laquelle, n est égal 2, 3 ou 4 et m représente un nombre entier de 2 à 250,
c2) au moins un acide hydroxycarboxylique de formule IIa ou IIb : 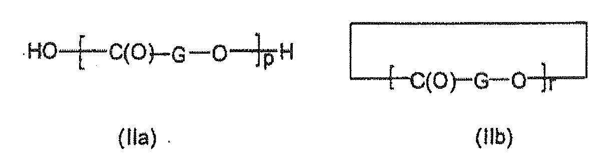 dans lesquelles, p est un nombre entier de 1 à 1500 et r est un nombre entier de 1 à 4, G représente un radical qui est choisi dans le groupe constitué des groupements phénylène, -(CH₂)_{q}-, q étant un nombre entier de 1 à 5, -C(R)H- et -C(R)HCH₂, R représentant un groupement méthyle ou éthyle,
c3) au moins un amino-alcanol en C₂-C₁₂ ou au moins un amino-cycloalcanol en C₅-C₁₀ ou leurs mélanges,
c4) au moins un diamino-alcane en C₁-C₈,
c5) au moins une 2,2'-bisoxazoline de formule générale III : 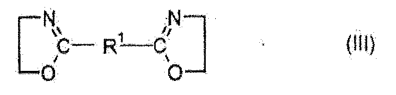 dans laquelle, R¹ représente une simple liaison, un groupement (CH₂)₂-alkylène, avec z = 2, 3 ou 4, ou un groupement phénylène,
c6) au moins un acide aminocarboxylique choisi dans le groupe constitué des acides aminés naturels, des polyamides, lesquels peuvent être obtenus par polycondensation d'un acide dicarboxylique ayant 4 à 6 atomes de carbone avec une diamine ayant 4 à 10 atomes de carbone, des composés de formules IVa et IVb : 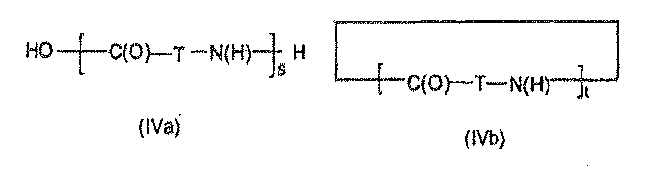 dans lesquelles, s est un nombre entier de 1 à 1500 et t est un nombre entier de 1 à 4, T représente un radical qui est choisi dans le groupe constitué des groupements phénylène, -(CH₂₎ᵤ-, où u est un nombre entier de 1 à 12, -C(R²)H- et -C(R²)HCH₂, R² représentant un groupement méthyle ou éthyle,
et des polyoxazolines présentant l'unité répétées : 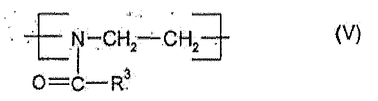 dans laquelle, R³ représente l'hydrogène, un alkyle en C₁-C₆, un cycloalkyle en C₅-C₈, un phényle non substitué ou substitué par jusqu'à trois groupements alkyle en C₁-C₄, ou un tétrahydro-furyle,
ou des mélanges des composants c1) à c6),
et
D) un composant choisi parmi :
d1) au moins un composé présentant au moins trois groupements capables de réagir de manière à former un ester,
d2) au moins un isocyanate,
d3) au moins un divinyléther,
ou des mélanges des composants d1) à d3).

3. Mélange de polyesters biodégradable selon la revendication 2, dans lequel le composant i) se **caractérise en ce que** :
l'acide dicarboxylique aliphatique ou cycloaliphatique (composant a1)) est représenté par l'acide succinique, l'acide adipique ou l'acide sébacique, par leurs dérivés capables de former des esters, ou leurs mélanges ;
l'acide dicarboxylique aromatique (composant a2)) est représenté par l'acide téréphtalique ou par ses dérivés capables de former des esters, et
le composant de diol (composant B) est représenté par le 1,4-butanediol ou le 1,3-propanediol.

4. Mélange de polyesters, biodégradable, selon les revendications 1 à 3, dans lequel le composant ii est un polylactide, un poly(β-hydroxybutyrate) ou un poly(β-hydroxybutyrate-co-valérate).

5. Mélange de polyesters, biodégradable, selon la revendication 1, contenant 60 à 95 % en poids de polyhydroxybutyrate ou de polylactide, comme composant ii.

6. Mélange de polyesters, biodégradable, selon les revendications 1 à 4, comprenant :
15 à 80 % en poids du composant i, et
85 à 20 % en poids du composant ii,
sur la base, respectivement, du poids total des composants i et ii.

7. Mélange de polyesters, biodégradable, selon la revendication 6, comprenant :
40 à 60 % en poids du composant i, et
60 à 40 % en poids du composant ii,
sur la base, respectivement, du poids total des composants i et ii.

8. Mélange de polyesters, biodégradable, selon la revendication 1, dans lequel le composant i forme une phase continue ou cocontinue.

9. Mélange de polyesters, biodégradable, selon la revendication 1, dans lequel le composant i forme une phase continue.

10. Mélange de polyesters, biodégradable, selon les revendications 1 à 9, comprenant 0,1 à 10 % en poids du composant iii par rapport au poids total des composants i et ii.

11. Procédé de fabrication de mélanges de polyesters biodégradables selon les revendications 1 à 10, **caractérisé en ce que** l'on mélange et fait réagir les composants i, ii et iii en une étape.

12. Procédé de fabrication de mélanges de polyesters biodégradables selon les revendications 1 à 10, **caractérisé en ce que**, dans une première étape, on mélange 5 à 35 % en poids du composant iii et 65 à 95 % en poids du composant i, afin d'élaborer le lot de ramification, à des températures situées dans la plage de 110 à 145 °C et, dans une deuxième étape, on ajoute à ce lot de ramification le composant ii et, éventuellement, un autre composant i, puis on fait réagir le mélange obtenu, constitué des composants i, ii et iii à des températures situées dans la plage de 150 à 250 °C.

13. Procédé de fabrication de mélanges de polyesters biodégradables selon la revendication 11 ou 12, **caractérisé en ce que** l'on ajoute un autre composant ii dans le cadre d'une étape supplémentaire (3).

14. Procédé de fabrication de mélanges de polyesters biodégradables, présentant une proportion de polyhydroxybutyrate ou de polylactide (composant ii) > 50 % en poids, lequel consiste :
a) à fabriquer un composé intermédiaire, qui contient 48 à 60 % en poids de composant i, 40 à 50 % en poids de composant ii et 0,5 à 2 % en poids de composant iii, les composants i et iii étant tels que définis dans la revendication 1, et
b) à mélanger ce composé intermédiaire à un autre composant ii, jusqu'à ce que la teneur souhaitée en composant ii soit ajustée dans le mélange de polyesters.

15. Mélanges de polyesters biodégradables pouvant être obtenus selon la revendication 14.

16. Procédé de fabrication de mélanges de polyesters biodégradables selon les revendications 11 à 13, **caractérisé en ce que** l'on ajoute, à l'une des étapes (1) à (3), ou dans le cadre d'une étape commune, du 1,3-propionate d'acide sébacique et/ou du 1,4-butanoate d'acide sébacique sous forme polymère ou oligomère.

17. Lot de ramification, contenant :
5 à 35 % en poids du composant iii, tel que défini dans la revendication 1, et
65 à 95 % en poids du composant i, tel que défini dans les revendications 1 à 3.

18. Lot de ramification selon la revendication 17, contenant :
10 à 20 % en poids du composant iii, et
80 à 90 % en poids du composant i.

19. Utilisation des mélanges de polyesters biodégradables selon les revendications 1 à 10, pour la fabrication de pièces moulées, de feuilles ou de fibres.

20. Pièces moulées, feuilles ou fibres, comprenant des mélanges de polyesters biodégradables selon les revendications 1 à 10.

21. Pièces moulées, feuilles ou fibres, fabriquées en appliquant un procédé selon la revendication 13.
